# EUROPEAN PATENT SPECIFICATION

(11) **EP 3 745 763 B1**
(45) Date of publication and mention of the grant of the patent: **30.07.2025**
(21) Application number: 19744502.6
(22) Date of filing: 17.01.2019
(51) Int. Cl.: H04B 7/06, H04W 24/04, H04W 74/0838, H04W 76/19, H04W 74/0833

(54) **TRANSMISSION OF A BEAM RECOVERY REQUEST USING A RANDOM ACCESS PREAMBLE RESPONSIVE TO A BEAM FAILURE INSTANCE COUNTER IN A HIGHER LAYER**
ÜBERTRAGUNG EINER STRAHLWIEDERHERSTELLUNGSANFRAGE UNTER VERWENDUNG EINER ZUFALLSZUGRIFFSPRÄAMBEL ALS REAKTION AUF EINEN STRAHLAUSFALLINSTANZZÄHLER IN EINER HÖHEREN SCHICHT
TRANSMISSION D'UNE DEMANDE DE RÉCUPÉRATION DE FAISCEAU EN UTILISANT UN PRÉAMBULE D'ACCÈS ALÉATOIRE EN RÉPONSE À UN COMPTEUR D'INSTANCES DE DÉFAILLANCE DE FAISCEAU DANS UNE COUCHE SUPÉRIEURE

(30) Priority: 24.01.2018 JP 2018022497
(43) Date of publication of application: 02.12.2020
(73) Proprietor: NTT DOCOMO, INC., Chiyoda-ku Tokyo 100-6150 (JP)
(72) Inventor: YOSHIOKA, Shohei, Tokyo 100-6150 (JP); NAGATA, Satoshi, Tokyo 100-6150 (JP); LIU, Min, Beijing 100190 (CN); WANG, Jing, Beijing 100190 (CN); NA, Chongning, Beijing 100190 (CN); KAKISHIMA, Yuichi, Palo Alto, CA 94304 (US)
(74) Representative: Hoffmann Eitle
(86) International application number: PCT/JP2019/001313
(87) International publication number: WO 2019/146497

(56) References cited:
- EP-A1- 3 745 814
- EP-A1- 3 783 997
- NOKIA ET AL: "Beam recovery procedure", vol. RAN WG2, no. Vancouver, Canada; 20180122 - 20180126, 12 January 2018 (2018-01-12), XP051386474, Retrieved from the Internet <URL:http://www.3gpp.org/ftp/tsg%5Fran/WG2%5FRL2/TSGR2%5FAHs/2018%5F01%5FNR/Docs/> [retrieved on 20180112]
- MEDIATEK INC: "Further Clarification on Beam Failure Recovery Procedure", vol. RAN WG2, no. Vancouver, Canada; 20180122 - 20180126, 12 January 2018 (2018-01-12), XP051386275, Retrieved from the Internet <URL:http://www.3gpp.org/ftp/tsg%5Fran/WG2%5FRL2/TSGR2%5FAHs/2018%5F01%5FNR/Docs/> [retrieved on 20180112]
- MEDIATEK INC: "Clarifications on Beam Failure Recovery Procedure", vol. RAN WG2, no. Athens, Greece; 20180226 - 20180302, 16 February 2018 (2018-02-16), XP051400143, Retrieved from the Internet <URL:http://www.3gpp.org/ftp/tsg%5Fran/WG2%5FRL2/TSGR2%5F101/Docs/> [retrieved on 20180216]
- HUAWEI ET AL: "Correction to random access procedures in TS 38.321", vol. RAN WG2, no. Vancouver, Canada; 20180122 - 20180126, 12 January 2018 (2018-01-12), XP051385936, Retrieved from the Internet <URL:http://www.3gpp.org/ftp/tsg%5Fran/WG2%5FRL2/TSGR2%5FAHs/2018%5F01%5FNR/Docs/> [retrieved on 20180112]
- NOKIA ET AL.: "Clarifications to beam recovery procedure", 3GPP TSG RAN WG2 ADHOC_2018_01_NR R2-1800963, 13 January 2018 (2018-01-13), XP051386473
- VIVO: "Clarification on beam failure recovery and text proposal", 3GPP TSG RAN WG2 ADHOC_2018_01_NR R2-1800867, 13 January 2018 (2018-01-13), XP051386391
- ERICSSON: "Remaining details and corrections for beam recovery", 3GPP TSG RAN WG1 ADHOC_NR_AH_1801 R1-1800700, 13 January 2018 (2018-01-13), XP051385018
- ITRI: "Discussion on timer for beam failure recovery", 3GPP TSG RAN WG1 ADHOC_NR_AH_1801 R1-1800642, 12 January 2018 (2018-01-12), XP051384403

## Description

### Technical Field

The present disclosure relates to a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower latency and so on (see non-patent literature 1). In addition, the specifications of LTE-A (LTE advanced and LTE Rel. 10, 11, 12 and 13) have also been drafted for the purpose of achieving increased capacity and enhancement beyond LTE (LTE Rel. 8 and 9).

Successor systems of LTE are also under study (for example, referred to as "FRA (Future Radio Access)," "5G (5th Generation mobile communication system)," "5G+ (plus)," "NR (New Radio)," "NX (New radio access)," "FX (Future generation radio access)," "LTE Rel. 14 or 15 and later versions," etc.).

In existing LTE systems (LTE Rel. 8 to 13), the quality of a radio link is subject to monitoring (RLM (Radio Link Monitoring)). When a radio link failure (RLF) is detected based on RLM, a user terminal (UE (User Equipment)) is required to re-establish the RRC (Radio Resource Control) connection.

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010 NOKIA ET AL, "Beam recovery procedure", 3GPP DRAFT
R2-1800964, 12 January 2018, proposes introducing a change directed to beam failure detection by introducing a BFI COUNTER (Beam Failure Instance) which counts the beam failure instance indications from L1. Upon the counter reaching RRC configured number of beam failure instances, beam failure is detected and beam failure recovery request procedure initiated , wherein a contention free Random Access Preamble for beam failure recovery request is transmitted. MEDIATEK INC, "Further Clarification on Beam Failure Recovery Procedure", 3GPP DRAFT
R2-1800652, 12 January 2018, discusses some misalignments between RAN1 and RAN2 and proposes that the MAC layer detects beam failure by counting a number of consecutive detected beam failure instances, which is indicated from PHY layer, and that Beam failure recovery transmission is triggered when both beam failure is detected and candidate beam is identified. Nokia, Nokia Shanghai Bell, "Clarifications to beam recovery procedure", 3GPP DRAFT
R2-1800963, 12 January 2018, discusses that a beam recovery request can be transmitted if the number of consecutive detected beam failure instance exceeds a configured maximum number. Vivo, "Clarification on beam failure recovery and text proposal", 3GPP DRAFT
R2-1800867, 12 January 2018, discusses that beam failure instances should be counted in physical layer. In physical layer, after a number of consecutive beam failure instances, *NrOfBeamFailureInstance,* physical layer will provide an indication to MAC layer for beam failure event. Ericsson, "Remaining details and corrections for beam recovery", 3GPP DRAFT
R1-1800700, 13 January 2018, discusses that during the entire beam recovery procedure, the UE is required to monitor its allocated CORESET(s) (and all the associated search spaces) in addition to the beam recovery CORESET, and when the beam recovery timer expires, the beam failure instance counter is reset and beam failure detection monitoring is resumed. ITRI, "Discussion on timer for beam failure recovery", 3GPP DRAFT
R1-1800642, 12 January 2018, discusses that upon beam failure declaration, the timer for beam failure recovery starts.

### Technical Problem and Object of the Invention

Furthermore, future radio communication systems (for example, LTE Rel. 14 or later versions, NR or 5G etc.) are under study to allow communication using beamforming (BF).

Also, in order to prevent occurrence of radio link failures (RLFs) in future radio communication systems, studies are underway to perform a procedure for detecting beam failures and switching to other beams (which may be referred to as "beam recovery (BR) procedure," and the like). The question lies in how to control the beam recovery procedure based on beam failure detection results.

It is therefore an object of the present disclosure to provide a user terminal and a radio communication method, whereby recovery from beam failures can be controlled properly.

### Solution to Problem

The invention is defined by the subject-matter of the independent claims. Advantageous embodiments are defined in the dependent claims. Further examples not falling within the scope of the claims are not part of the invention, but are provided for facilitating the understanding of the invention. In accordance with one example of the present disclosure, a user terminal has a control section that increments a beam failure instance counter based on a beam failure instance indication received from a physical layer, in a higher layer, and a transmission section that transmits a random access preamble based on a transmission command from the higher layer when the beam failure instance counter reaches or exceeds a given threshold.

### Advantageous Effects of Invention

According to one aspect of the present disclosure, recovery from beam failures can be controlled properly.

### Brief Description of Drawings

FIG. 1 is a schematic diagram in which RLF is detected based on IS/OOS;
FIG. 2 is a diagram to show an example of the beam recovery procedure;
FIG. 3 is a diagram to show an example of the beam recovery procedure using beam failure instance indications, according to the present embodiment;
FIG. 4 is a diagram to show an exemplary schematic structure of a radio communication system according to the present embodiment;
FIG. 5 is a diagram to show an exemplary overall structure of a radio base station according to the present embodiment;
FIG. 6 is a diagram to show an exemplary functional structure of a radio base station according to the present embodiment;
FIG. 7 is a diagram to show an exemplary overall structure of a user terminal according to the present embodiment;
FIG. 8 is a diagram to show an exemplary functional structure of a user terminal according to the present embodiment; and
FIG. 9 is a diagram to show an exemplary hardware structure of a radio base station and a user terminal according to the present embodiment.

### Description of Embodiments

Furthermore, future radio communication systems (for example, LTE Rel. 14 or later versions, NR or 5G etc.) are under study to allow communication using beamforming (BF).

For example, beams that are used by a user terminal and/or a radio base station (for example, a gNB (gNodeB)) may include beams that are used to transmit signals (also referred to as "transmitting beams," "Tx beams," etc.), beams that are used to receive signals (also referred to as "receiving beams," "Rx beams," etc.) and so forth. A pair of a transmitting beam from the transmitting end and a receiving beam from the receiving end may be referred to as a "beam pair link (BPL)."

To select BPLs, the base station and the use terminal may select beams that are favorable for both, autonomously, or may exchange information that can identify combinations that are suitable for both, via RRC, MAC CE, L1 signaling, etc., and select beam based on this information.

Between different BPLs, either transmission or receipt, or both, may use different antenna devices for transmission and receipt (for example, antenna panels, antenna element sets, transmitting/receiving points ("TRPs (Transmission and Reception Points)," "TxRPs (Transmitter and Reception Points)," "TRxPs (Transmission and Receiver Points)," etc.). In this case, quasi-co-location (QCL), which shows the statistical properties of channels, also varies between different BPLs. Therefore, QCL may be the same or different between different BPLs, and information as to whether QCLs is the same or different may be recognized by the transmitter/receiver, by way of signaling or measurements.

In an environment to use BF, radio link is more susceptible to the impact of blockage from obstacles, and so the quality of a radio link is more likely to deteriorate. There is a danger that, if the quality of a radio link deteriorates, radio link failures (RLFs) might occur frequently. When an RLF occurs, it is necessary to re-connect with cells, so that, frequent occurrence of RLFs may lead to a decline in system throughput.

For this reason, the method of radio link monitoring (RLM) for future radio communication systems is being discussed. For example, envisaging future radio communication systems, research is underway to support one or more downlink signals (also referred to as "DL-RSs (Reference Signals)" and the like) for RLM.

Resources for DL-RSs (DL-RS resources) may be associated with resources and/or ports for synchronization signal blocks (SSBs) or channel state measurement RSs (CSI-RSs (Channel State Information RSs)). Note that SSBs may be referred to as "SS/PBCH (Physical Broadcast CHannel) blocks" and the like.

The DL-RS may be at least one of a primary synchronization signal (PSS), a secondary synchronization signal (SSS), a mobility reference signal (MRS), a CSI-RS, a demodulation reference signal (DMRS), a beam-specific signal and so forth, or may be a signal formed by enhancing and/or changing these (for example, a signal formed by changing the density and/or cycle).

A user terminal may be configured, by higher layer signaling, to perform measurements using DL-RS resources. In this case, the assumption is that the user terminal, where such measurements are configured, determines whether the radio link is in a synchronous state (IS (In-Sync)) or in an asynchronous state (OOS (Out-Of-Sync)), based on measurement results in DL-RS resources. In the event no DL-RS resources are configured from the radio base station, default DL-RS resources to allow the user terminal to conduct RLM may be set forth in the specification.

If the quality of a radio link that is estimated (or "measured") based at least on 1 DL-RS resource configured exceeds a given threshold Qᵢₙ, the user terminal may judge that the radio link is in IS.

If the quality of a radio link that is estimated based at least on 1 DL-RS resource configured falls below a given threshold Qₒᵤₜ, the user terminal may judge that the radio link is in OOS. Note that this radio link quality may correspond to, for example, the block error rate (BLER) of a hypothetical PDCCH.

In existing LTE systems (LTE Rel. 8 to 13), IS and/or OOS (IS/OOS) are reported (indicated) from the physical layer to higher layers (for example, MAC layer, RRC layer, etc.) in a user terminal, and RLF is detected based on reports of IS/OOS.

To be more specific, when a user terminal receives an OOS report associated with a given cell (for example, the primary cell) N310 times, the user terminal will activate (start) a timer T310. When the user terminal receives an IS report associated with the given cell N311 times while the timer T310 is running, the user terminal will stop the timer T310. When the timer T310 expires, the user terminal judges that RLF has been detected with respect to this given cell.

Note that the names "N310," "N311," "T310" and others are by no means limiting. T310 may be referred to as a "timer for RLF detection" or the like. N310 may be referred to as "the number of times OOS is reported before timer T310 is activated" or the like. N311 may be referred to as "the number of times IS is reported before the timer T310 is stopped" or the like.

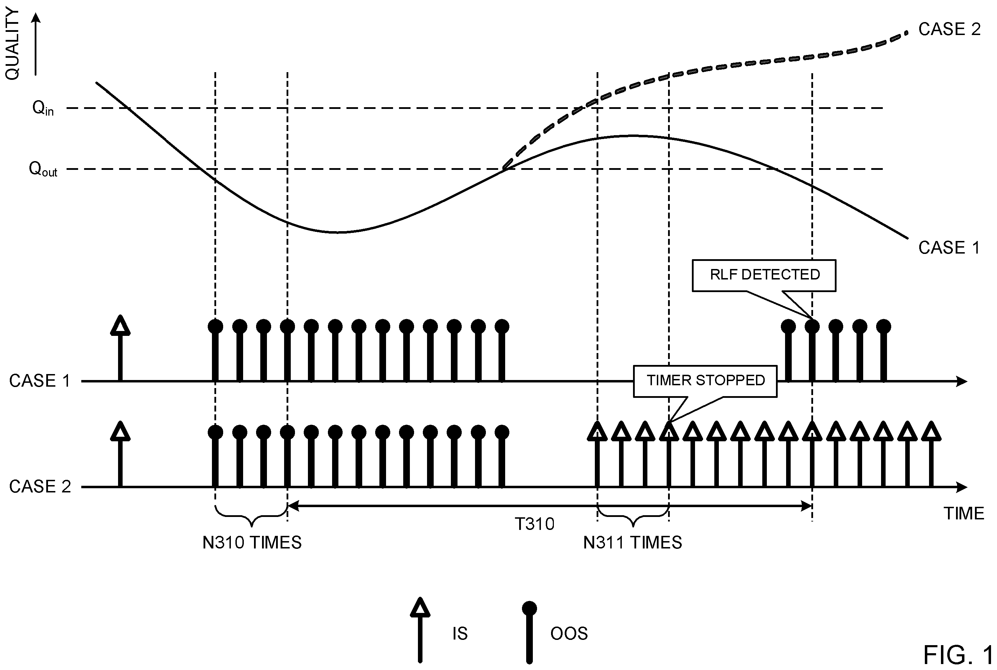

FIG. 1 is a schematic diagram in which RLF is detected based on IS/OOS. This drawing assumes that N310=N311=4. T310 shows the period from the activation of timer T310 to its expiration, but does not show a timer counter.

The upper part of FIG. 1 shows 2 cases (case 1 and case 2) in which the estimated quality of a radio link changes. The lower part of FIG. 1 shows IS/OOS reports corresponding to the above 2 cases.

In case 1, first, OOS occurs N310 times, and the timer T310 starts. After that, if T310 expires while the radio link quality does not exceed the threshold Qᵢₙ, RLF is detected.

Referring to case 2, although the timer T310 starts as in case 1, following this, the radio link quality exceeds the threshold Qᵢₙ and IS occurs N311 times, and T310 stops.

Now, envisaging future radio communication systems (for example, LTE Rel. 14 or later version, NR, 5G, etc.), research is being conducted on executing a procedure for switching to another beam (which may be referred to as "beam recovery (BR)," "beam failure recovery (BFR)," "L1/L2 beam recovery," etc.) when the quality of a particular beam deteriorates in order to prevent the occurrence of RLF. RLF, as mentioned earlier, is detected by controlling RS measurements in the physical layer and the activation and expiration of timers in higher layers, and recovery from RLF should follow the same procedure as that of random access, but in switching to other beams (BR, L1/L2 beam recovery), it is expected that the procedures in at least some layers will be more simplified than recovery from RLF.

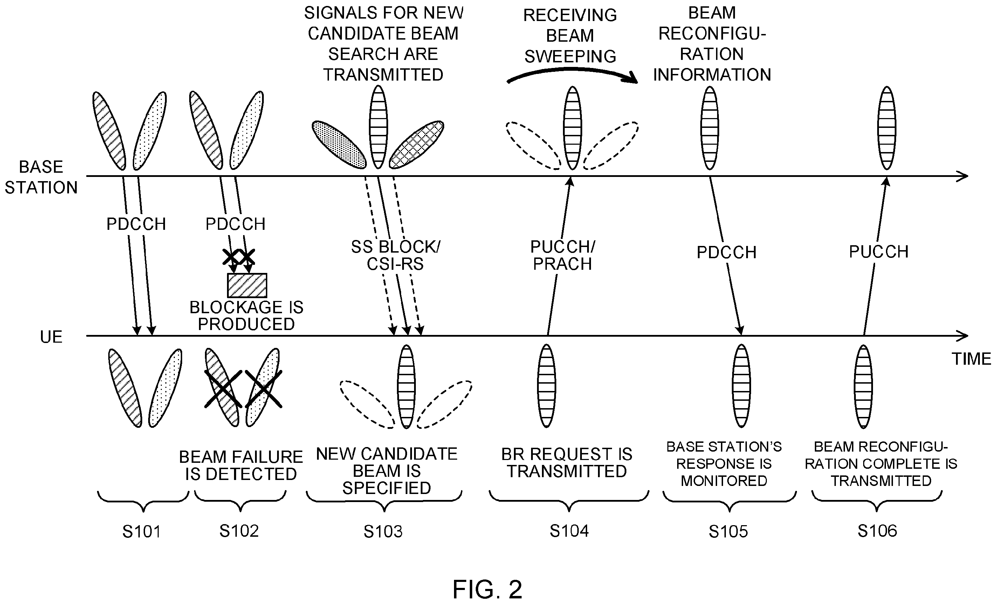

FIG. 2 is a diagram to show an example of the beam recovery procedure. The number of beams and the like are examples and not limiting. In the initial state shown in FIG. 2 (step S101), a user terminal receives a downlink control channel (PDCCH (Physical Downlink Control CHannel)), which is transmitted from a radio base station using 2 beams.

In step S102, when the radio wave from the radio base station is blocked, the user terminal cannot detect the PDCCH. Such blocking might take place, for example, due to the impacts of obstacles between the user terminal and the radio base station, fading, interference and so forth.

The user terminal detects beam failures when a given condition is satisfied. The radio base station may judge that the user terminal has detected a beam failure when no report arrives from the user terminal, or the radio base station may judge that a beam failure has been detected when a given signal (beam recovery request in step S104) is received from the user terminal.

In step S103, the user terminal starts a search for new candidate beams to use for communication, for beam recovery. To be more specific, upon detecting a beam failure, the user terminal performs measurements based on pre-configured DL-RS resources, and identifies one or more new candidate beams that are desirable (that have good quality, for example). In the case of this example, 1 beam is identified as a new candidate beam.

In step S104, the user terminal, having identified a new candidate beam, transmits a beam recovery request. The beam recovery request may be transmitted, for example, by using at least one of an uplink control channel (PUCCH (Physical Uplink Control CHannel)), a random access channel (PRACH (Physical Random Access CHannel)), and a UL grant-free PUSCH (Physical Uplink Shared CHannel). The beam recovery request may be referred to as a "beam recovery request signal," a "beam failure recovery request signal," and the like.

The beam recovery request may include information about the new candidate beam identified in step S103. The resource for the beam recovery request may be associated with the new candidate beam. Information about the beam may be reported by using, for example, a beam index (BI)), a given reference signal's port and/or resource index (for example, CSI-RS resource indicator (CRI)), and so forth.

In step S105, the radio base station, having detected the beam recovery request, transmits a response signal in response to the beam recovery request from the user terminal. The response signal may include reconfiguration information (for example, configuration information of DL-RS resource) associated with one or more beams. The response signal may be transmitted, for example, in a user terminal-common search space in PDCCH. The user terminal may determine which transmitting beam and/or receiving beam to use based on beam reconfiguration information.

In step S106, the user terminal may transmit, to the radio base station, a message indicating that beam reconfiguration has been completed. The message may be transmitted by using the PUCCH, for example.

A successful beam recovery (BR success) may represent, for example, the case in which step S106 is reached. On the other hand, failure of beam recovery (BR failure) may represent, for example, a case where no candidate beam can be identified in step S103.

Note that the index numbers of these steps are just numbers for illustrative purposes, and several steps may be put together, or re-ordered.

The present inventors have come up with a control method that is suitable for steps S102 to S104 in the beam recovery procedure described above. To be more specific, a control method that is suitable for interaction between the physical layer (which may be referred to as, for example, the "PHY (PHYsical) layer," "layer 1," etc.) and higher layers (which may be referred to as, for example, the "MAC (Medium Access Control) layer," "layer 2," etc.).

Now, embodiments of this disclosure will be described below in detail with reference to the accompanying drawings. Higher layer as used in the following description will refer to the MAC layer, but this is by no means limiting.

### (Radio Communication Method)

In one example of the present disclosure, when UE detects a beam failure, the UE sends a beam failure-related report from the PHY layer to the MAC layer.

The occurrence of beam failure may be referred to as a "beam failure instance" and the like. The above-noted beam failure-related report may be referred to as a "beam failure instance indication," "information about a beam failure," "information about whether a beam failure is present or not" and the like. A beam failure instance may cover any number of beam failures (for example, 0 times, 1 time, multiple times, etc.) or cover beam failures detected in a given period.

The beam failure instance indication may contain, for example, information to report at least one of the following states.
(1) State 0: no beam failure (non-beam failure)
(2) State 1: beam failure + new candidate beam (beam failure instance & new candidate beam)
(3) State 2: beam failure + no new candidate beam (beam failure instance & no candidate beam found)

That is, the beam failure instance indication may include information to indicate whether a beam failure (or beam failure instance) has occurred or not, and/or whether there is a new candidate beam or not.

When the PHY layer of the UE does not detect a beam failure in the beam recovery procedure, the PHY layer may transmit a beam failure instance indication to show state 0 to the MAC layer. Note that when it is mentioned that no beam failure is detected, this can mean that there is at least 1 beam where no beam failure is detected. Also, a beam failure instance indication to show state 0 may be referred to as a "non-beam failure instance indication."

When the PHY layer of the UE does detects a beam failure in the beam recovery procedure, the PHY layer may transmit a beam failure instance indication to show state 1 or state 2, to the MAC layer.

After detecting a beam failure, if a new candidate beam is found, the PHY layer of the UE may transmit a beam failure instance indication to show state 1, to the MAC layer. At this time, information (for example, a beam index) related to the new candidate beam that is found may be reported to the MAC layer together with or instead of the beam failure instance indication. If multiple new candidate beams are found, information about one or more new candidate beams may be reported to the MAC layer.

After detecting a beam failure, the PHY layer of the UE may transmit a beam failure instance indication to show state 2, to the MAC layer, if a new candidate beam is not found.

The MAC layer counts beam failure instances based on beam failure instance indications. Beam failure instances may be counted using a beam failure instance counter. This counter may be used for the MAC layer. This counter may start from a given value (for example, 0).

The MAC layer may increment the beam failure instance counter by a given value (for example, +1) when receiving a beam failure instance indication to show state 1 or 2, from the PHY layer.

When the MAC layer receives a non-beam-failure instance indication from the PHY layer, the MAC layer may stop or reset the beam failure instance counter, or perform a specific operation (for example, set the timer value to 0, -1, etc.). Resetting the beam failure instance counter upon receipt of a non-beam-failure instance indication is equivalent to the MAC layer's counting of consecutive beam failure instances.

Note that, when it is mentioned that a non-beam-failure instance indication is received from the PHY layer, this may be interpreted as meaning that a beam failure instance indication has not been received for a certain period of time, and the like.

The MAC layer may trigger the transmission of a beam recovery request when the beam failure instance counter reaches or exceeds a given threshold. In this case, the MAC layer may report a beam recovery request transmission command (trigger information) to the PHY layer. The MAC layer may select information about one or more new candidate beams (for example, beam index) to include in the beam recovery request, and report this to the PHY layer.

Note that a timer for beam failure instances (also referred to as a "beam failure instance timer") may be used with or instead of the beam failure instance counter. If the beam failure instance timer is not activated when a beam failure instance indication is received, the MAC layer of the UE may start the timer. The MAC layer may trigger a beam recovery request when the timer expires or when no non-beam-failure instance indication is received before the timer expires.

The MAC layer may decrement the beam failure instance timer by a given value when receiving a beam failure instance indication to show state 1 or 2, from the PHY layer.

When the MAC layer receives a non-beam failure instance indication from the PHY layer, the MAC layer may stop the beam failure instance timer, reset the beam failure instance timer to the initial value, or perform a specific operation (for example, increment the timer by a given value).

Note that information regarding the beam failure instance counter or the beam failure instance timer (for example, the above-mentioned given threshold, timer duration, etc.) may be reported by using higher layer signaling, physical layer signaling, or a combination of these.

Here, higher layer signaling may be, for example, any of RRC (Radio Resource Control) signaling, MAC (Medium Access Control) signaling, broadcast information, etc., or a combination of these.

For example, a MAC control element (MAC CE (Control Element)), a MAC PDU (Protocol Data Unit), etc. may be used for MAC signaling. The broadcast information may be, for example, the master information block (MIB), a system information block (SIB), minimum system information (RMSI (Remaining Minimum System Information)) and the like.

Physical layer signaling may be, for example, downlink control information (DCI).

The PHY layer transmits a beam recovery request based on the above trigger. Note that the MAC layer may decide which channel is used to transmit the beam recovery request from the PHY layer, and send an indication thereof to the PHY layer. For example, the MAC layer may choose whether to use a contention-based PRACH (CBRA (Contention-Based PRACH)) or use a non-contention-based PRACH (CFRA (Contention-Free PRACH)) to transmit a beam recovery request from the PHY layer.

The beam recovery request may include information related to one or more new candidate beams, and this information may be selected by the PHY layer (based on, for example, the measured quality of the new candidate beams), or may be selected based on a report from the MAC layer.

For example, the MAC layer may command the PHY layer to include, in a beam recovery request, a new candidate beam that corresponds to a BI that has been reported a greater number of times than other BIs by beam failure instance indications.

If the new candidate beam selected for the beam recovery request is associated with a given CFRA (given CFRA configuration), the MAC layer may decide to transmit the beam recovery request using that CFRA otherwise, the MAC layer may decide to transmit a beam recovery request using CBRA.

Note that information about the association between new candidate beam and the CFRA may be reported using higher layer signaling, physical layer signaling, or a combination of these.

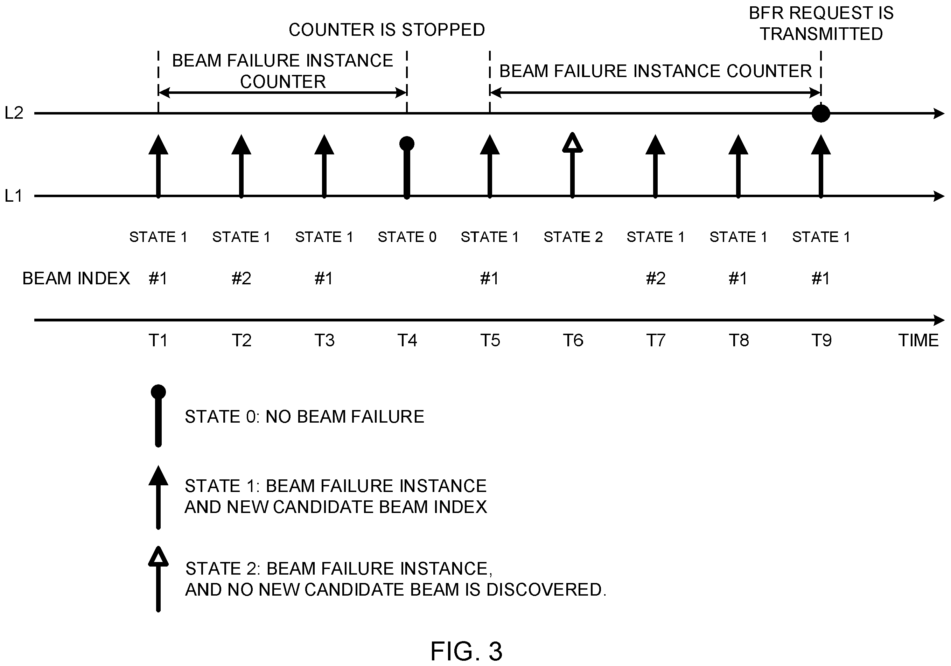

FIG. 3 is a diagram to show an example of the beam recovery procedure using beam failure instance indications, according to the present embodiment. FIG. 3 is a schematic diagram of contents of beam failure instance indications corresponding to times T1 to T9 and operations related to each layer (L1 and L2) in the beam recovery procedure.

In this example, L1 of the UE detects a beam failure at time T1, searches for new candidate beams, and, as a result of this, discovers the beam of BI #1. L1 transmits a beam failure instance indication to show state 1 and BI #1, to L2. L2 receives the report and increments the count on the beam failure instance counter.

Similarly, at time T2, L1 discovers the beam of BI #2 and transmits a beam failure instance indication for state 1. At time T3, L1 discovers the beam of BI #1 and transmits a beam failure instance indication for state 1.

At time T4, no beam failure is detected, so that L1 does not have to transmit a beam failure instance indication, or L1 may transmit a beam failure instance indication for state 0. In this case, L2 may stop the beam failure instance counter.

At time T5, L1 discovers the beam of BI #1 and transmits a beam failure instance indication for state 1. At time T6, L1 cannot find a new candidate beam, and therefore transmits a beam failure instance indication for state 2. Times T7 and T8 may be the same as times T2 and T3, respectively, and therefore their description will be omitted.

At time T9, L1 discovers the beam of BI #1 and transmits a beam failure instance indication for state 1. L2 increments the count on the beam failure instance counter according to this indication, and transmits (triggers) a BFR request to L1 when the value on the counter reaches or exceeds a given threshold (in this example, 8), and L1 transmits a BFR request.

According to one embodiment of the present disclosure, it is possible to unify the contents reported between the PHY layer and the MAC layer for beam recovery, and avoid redundant mutual interaction. Also, the method (such as the channel) for transmitting beam recovery requests can be selected properly by the MAC layer.

### <Variations>

Referring back to the process of step S105 described above with reference to FIG. 2, a period to allow the UE to monitor for a response from the base station (for example, a gNB) in response to the beam recovery request may be provided. This period may be referred to as, for example, "gNB response window," "gNB window," "beam recovery request response window" or the like.

The UE may retransmit the beam recovery request when there is no gNB response detected in the window period.

Also, a period for performing a beam recovery procedure may be provided. The period may be referred to as "beam recovery timer." When this period expires, the UE may terminate or cancel the beam recovery procedure. The beam recovery timer may start with detecting beam failures and stop when a gNB response is received.

After having transmitted the beam recovery request, the UE may periodically transmit, or stop transmitting, beam failure instance indications, from the PHY layer to the MAC layer. The UE may control the retransmission of beam recovery requests from the MAC layer to the PHY layer based on beam failure instance indications.

As for the gNB response window, the PHY layer and the MAC layer may share the same gNB response window, or have different gNB response windows. These windows may be measured by, for example, the timer of the MAC layer and/or the PHY layer.

The gNB response window may be provided in the PHY layer alone. In this case, after transmitting a beam recovery request, the PHY layer may report to the MAC layer whether a gNB response has been received successfully.

For example, if a gNB response is received in a gNB window, the PHY layer may transmit a report to indicate that "a gNB response has been received (gNB response received)," to the MAC layer, or, otherwise, the PHY layer may transmit a report to indicate that "no gNB response has been received (gNB response not received)," to the MAC layer.

Note that, if no report to the effect "a gNB response has been received" arrives in a given period, the MAC layer may judge that an indication to the effect that "no gNB response has been received" has arrived. If no report to the effect "no gNB response has been received" arrives in a given period, the MAC layer may judge that an indication to the effect that "a gNB response has been received" has arrived.

If the MAC layer receives a report to indicate that "a gNB response has been received," the MAC layer may reset the beam failure instance counter, set the beam failure instance counter to a particular value, or perform a particular operation.

If the MAC layer receives a report to indicate that "no gNB response has been received," the MAC layer may trigger the transmission of a beam recovery request, again, to the PHY layer.

### (Radio Communication System)

Now, the structure of a radio communication system according to the present embodiment will be described below. In this radio communication system, communication is performed using at least one of the above examples or a combination of these.

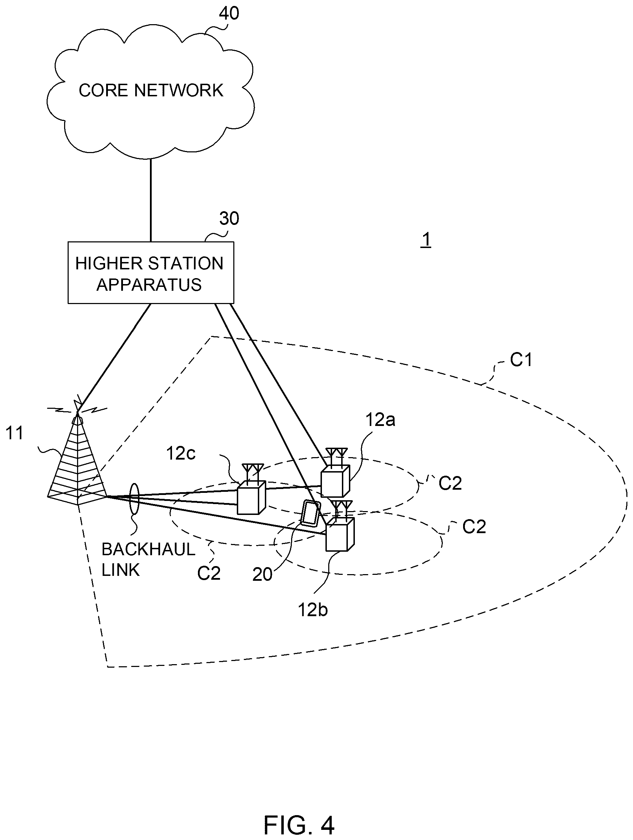

FIG. 4 is a diagram to show an exemplary schematic structure of a radio communication system according to the present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes 1 unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be seen as a system to implement these.

The radio communication system 1 includes a radio base station 11 that forms a macro cell C1, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement and number of cells and user terminals 20 are not limited to those illustrated in the drawing.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

Furthermore, the user terminals 20 can communicate by using time division duplexing (TDD) and/or frequency division duplexing (FDD), in each cell. Furthermore, in each cell (carrier), a single numerology may be used, or a plurality of different numerologies may be used.

A numerology may refer to communication parameters that are applied to transmission and/or receipt of a given signal and/or channel, and represent at least one of the subcarrier spacing, the bandwidth, the duration of symbols, the length of cyclic prefixes, the duration of subframes, the length of TTIs, the number of symbols per TTI, the radio frame configuration, the filtering process, the windowing process and so on.

The radio base station 11 and a radio base station 12 (or 2 radio base stations 12) may be connected with each other by cables (for example, by optical fiber, which is in compliance with the CPRI (Common Public Radio Interface), the X2 interface and so on), or by radio.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to these combinations, and other radio access schemes may be used as well.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. User data, higher layer control information, SIBs (System Information Blocks) and so on are communicated in the PDSCH. Also, the MIB (Master Information Blocks) is communicated in the PBCH.

The L1/L2 control channels include at least one of DL control channels (such as PDCCH (Physical Downlink Control CHannel), and/or an EPDCCH (Enhanced Physical Downlink Control CHannel), etc.), a PCFICH (Physical Control Format Indicator CHannel), a PHICH (Physical Hybrid-ARQ Indicator CHannel) and so on. Downlink control information (DCI), which includes PDSCH and/or PUSCH scheduling information, is communicated by the PDCCH.

Note that scheduling information may be reported in DCI. For example, DCI to schedule receipt of DL data may be referred to as a "DL assignment," and DCI to schedule UL data transmission may also be referred to as a "UL grant."

The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACKs," "ACK/NACKs," etc.) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel), a random access channel (PRACH (Physical Random Access CHannel)) and so on are used as uplink channels. User data, higher layer control information and so on are communicated by the PUSCH. Also, in the PUCCH, downlink radio quality information (CQI (Channel Quality Indicator)), delivery acknowledgment information, scheduling requests (SRs) and so on are communicated. By means of the PRACH, random access preambles for establishing connections with cells are communicated.

In the radio communication system 1, cell-specific reference signals (CRSs), channel state information reference signals (CSI-RSs), demodulation reference signals (DMRSs), positioning reference signals (PRSs) and so on are communicated as downlink reference signals. Also, in the radio communication system 1, measurement reference signals (SRSs (Sounding Reference Signals)), demodulation reference signals (DMRSs) and so on are communicated as uplink reference signals. Note that the DMRSs may be referred to as "user terminal-specific reference signals (UE-specific reference signals)." Also, the reference signals to be communicated are by no means limited to these.

### (Radio Base Station)

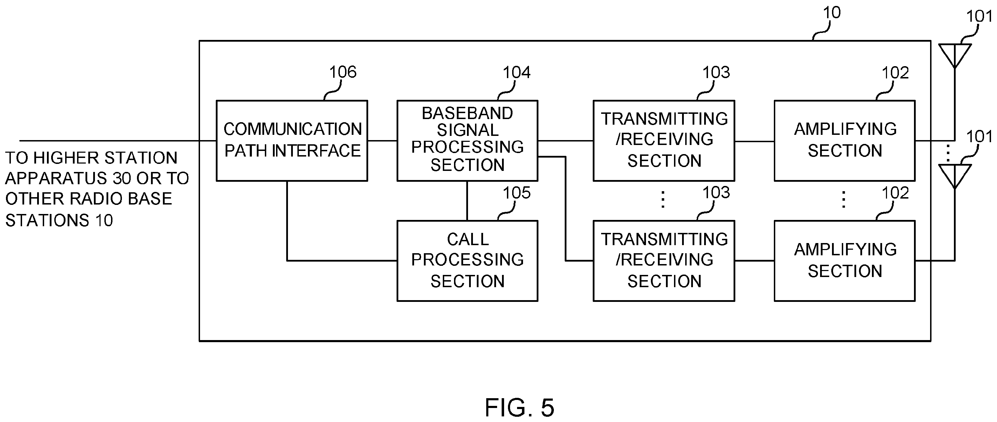

FIG. 5 is a diagram to show an exemplary overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which this disclosure pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a given interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving sections 103 may furthermore have an analog beamforming section that forms analog beams. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which this disclosure pertains. Furthermore, the transmitting/receiving antennas 101 may be constituted by, for example, array antennas. Also, the transmitting/receiving sections 103 are configured to be able to adopt single-BF and multi-BF.

The transmitting/receiving sections 103 may transmit signals using transmitting beams, or receive signals using receiving beams. The transmitting/receiving sections 103 may transmit and/or receive signals using given beams determined by the control section 301.

The transmitting/receiving sections 103 may receive various pieces of information described in each example above from the user terminal 20, or transmit these to the user terminal 20.

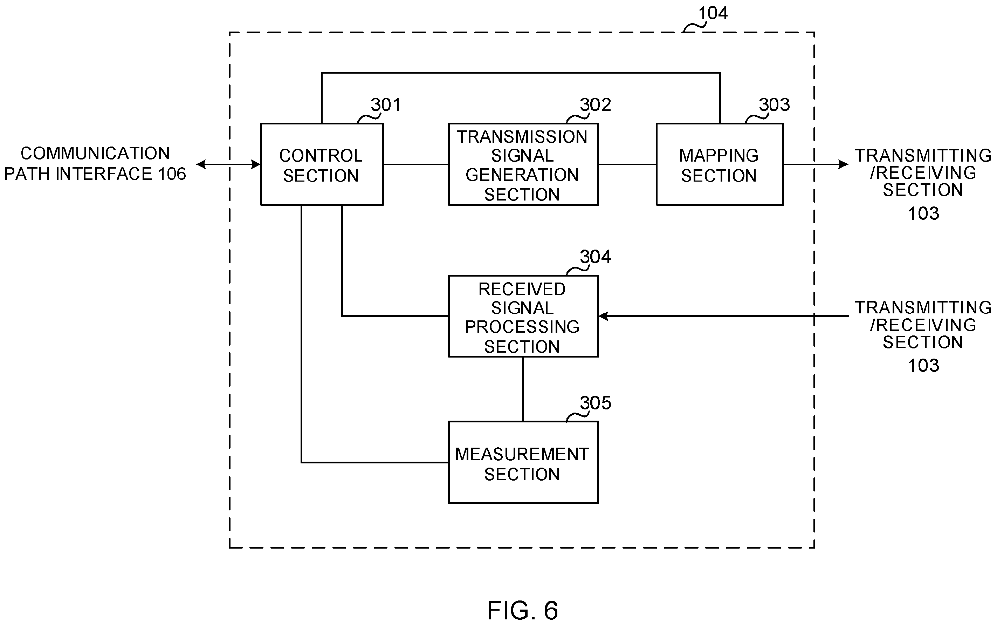

FIG. 6 is a diagram to show an exemplary functional structure of a radio base station according to the present embodiment. Note that, although this example primarily shows functional blocks that pertain to characteristic parts of present embodiment, the radio base station 10 has other functional blocks that are necessary for radio communication as well.

The baseband signal processing section 104 has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which this disclosure pertains.

The control section 301 controls, for example, generation of signals in the transmission signal generation section 302, allocation of signals in the mapping section 303, and so on. Furthermore, the control section 301 controls signal receiving processes in the received signal processing section 304, measurements of signals in the measurement section 305, and so on.

The control section 301 controls the scheduling (for example, resource allocation) of system information, downlink data signals (for example, signals transmitted in the PDSCH) and downlink control signals (for example, signals communicated in the PDSCH and/or the EPDCCH). Also, the control section 301 controls the generation of downlink control signals, downlink data signals and so on based on the results of deciding whether or not retransmission control is necessary in response to uplink data signals and so on.

The control section 301 controls scheduling of synchronization signals (for example, PSS/SSS), downlink reference signals (for example, CRS, CSI-RS, DMRS, etc.) and the like.

The control section 301 may exert control so that transmitting beams and/or receiving beams are formed by using digital BF (for example, precoding) in the baseband signal processing section 104 and/or analog BF (for example, phase rotation) in the transmitting/receiving sections 103.

The control section 301 may control the configuration of RLF and/or BR based on configuration information related to radio link failure (RLF) and/or beam recovery (BR).

The control section 301 may control radio link monitoring (RLM) and/or beam recovery (BR) for the user terminal 20. The control section 301 may exerts control so that a response signal in response to the beam recovery request is transmitted to the user terminal 20.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which this disclosure pertains.

For example, the transmission signal generation section 302 generates DL assignments, which report downlink data allocation information, and/or UL grants, which report uplink data allocation information, based on commands from the control section 301. DL assignments and UL grants are both DCI, in compliance with DCI format. Also, the downlink data signals are subjected to the coding process, the modulation process and so on, by using coding rates and modulation schemes that are determined based on, for example, channel state information (CSI) from each user terminal 20.

The mapping section 303 maps the downlink signals generated in the transmission signal generation section 302 to given radio resources based on commands from the control section 301, and outputs these to the transmitting/receiving sections 103. The mapping section 303 can be constituted by a mapper, a mapping circuit or mapping apparatus that can be described based on general understanding of the technical field to which this disclosure pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, etc.). For the received signal processing section 304, a signal processor, a signal processing circuit or signal processing apparatus that can be described based on general understanding of the technical field to which this disclosure pertains can be used.

The received signal processing section 304 outputs the decoded information acquired through the receiving processes, to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or measurement apparatus that can be described based on general understanding of the technical field to which this disclosure pertains.

For example, the measurement section 305 may perform RRM (Radio Resource Management) measurements, CSI (Channel State Information) measurements and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), etc.), SNR (Signal to Noise Ratio), the signal strength (for example, RSSI (Received Signal Strength Indicator)), transmission path information (for example, CSI), and so on. The measurement results may be output to the control section 301.

### (User Terminal)

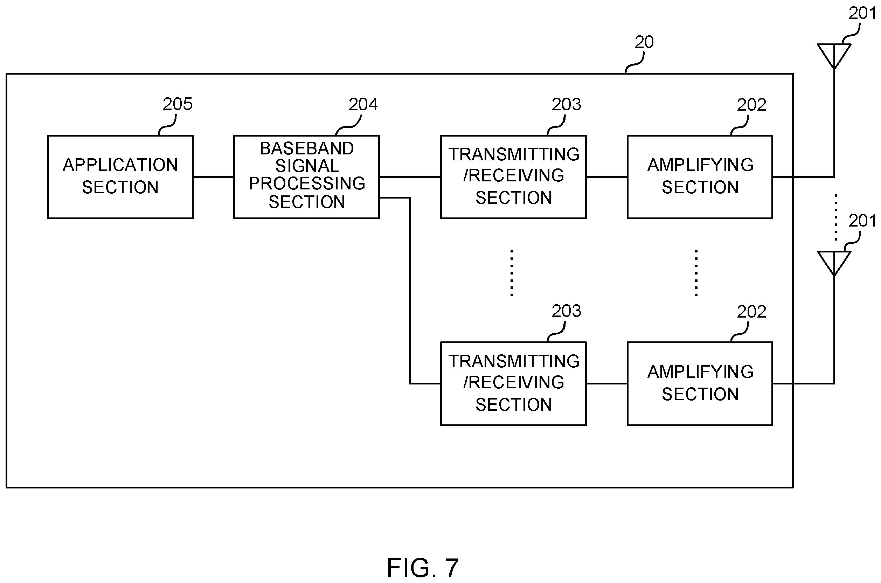

FIG. 7 is a diagram to show an exemplary overall structure of a user terminal according to the present embodiment. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which this disclosure pertains. Note that a transmitting/receiving section 203 may be structured as a transmitting/receiving section in one entity, or may be constituted by a transmitting section and a receiving section.

The baseband signal processing section 204 performs receiving processes for the baseband signal that is input, including an FFT process, error correction decoding, a retransmission control receiving process and so on. Downlink user data is forwarded to the application section 205. The application section 205 performs processes related to higher layers above the physical layer and the MAC layer, and so on. In the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203.

The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 may furthermore have an analog beamforming section that forms analog beams. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which this disclosure pertains. Furthermore, the transmitting/receiving antennas 201 may be constituted by, for example, array antennas. Also, the transmitting/receiving sections 203 are configured to be able to adopt single-BF and multi-BF.

The transmitting/receiving sections 203 may transmit signals using transmitting beams, or receive signals using receiving beams. The transmitting/receiving sections 203 may transmit and/or receive signals using given beams determined by the control section 401.

The transmitting/receiving sections 203 may receive various pieces of information described in each example above from the user terminal 20, or transmit these to the user terminal 20. For example, the transmitting/receiving sections 203 may transmit a beam recovery request to the radio base station 10.

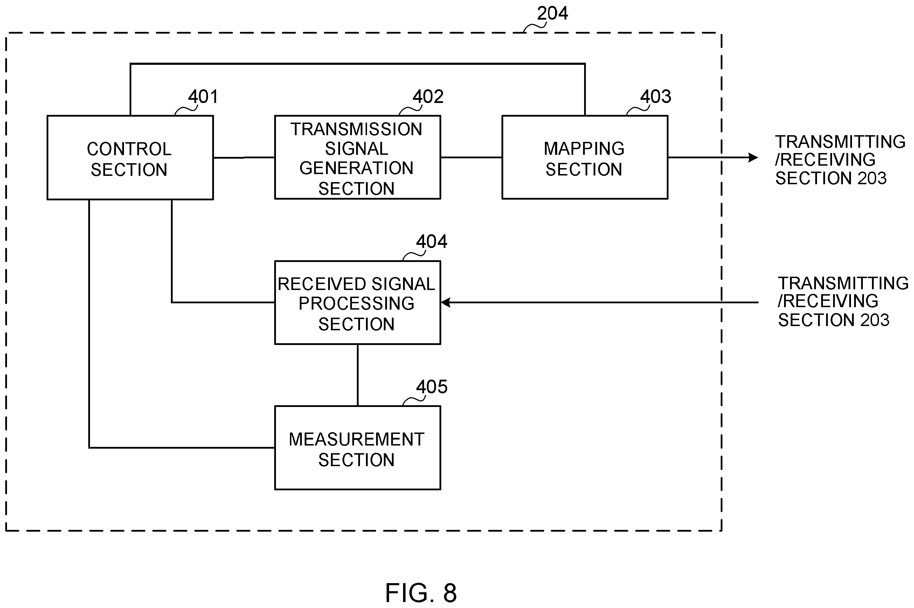

FIG. 8 is a diagram to show an exemplary functional structure of a user terminal according to the present embodiment. Note that, although this example primarily shows functional blocks that pertain to characteristic parts of present embodiment, the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations have only to be included in the user terminal 20, and some or all of these configurations may not be included in the baseband signal processing section 204.

The control section 401 controls the whole of the user terminal 20. For the control section 401, a controller, a control circuit or control apparatus that can be described based on general understanding of the technical field to which this disclosure pertains can be used.

The control section 401 controls, for example, generation of signals in the transmission signal generation section 402, allocation of signals in the mapping section 403, and so on. Furthermore, the control section 401 controls signal receiving processes in the received signal processing section 404, measurements of signals in the measurement section 405, and so on.

The control section 401 acquires the downlink control signals and downlink data signals transmitted from the radio base station 10, via the received signal processing section 404. The control section 401 controls the generation of uplink control signals and/or uplink data signals based on the results of deciding whether or not retransmission control is necessary for the downlink control signals and/or downlink data signals, and so on.

The control section 401 may exert control so that transmitting beams and/or receiving beams are formed using digital BF (for example, precoding) in the baseband signal processing section 204 and/or analog BF (for example, phase rotation) in the transmitting/receiving sections 203.

The control section 401 may control radio link monitoring (RLM) and/or beam recovery (BR) based on the measurement results of the measurement section 405.

The control section 401 may include a MAC layer processing section and a PHY layer processing section. Note that, the MAC layer processing section and/or the PHY layer processing section may be realized by any of the control section 401, the transmission signal generation section 402, the mapping section 403, the received signal processing section 404, and the measurement section 405, or a combination of these.

The MAC layer processing section performs MAC layer processing, and the PHY layer processing section performs PHY layer processing. For example, downlink user data and broadcast information input from the PHY layer processing section may be output to a higher layer processing section that performs RLC layer processing, PDCP layer processing, etc. through processing in the MAC processing section.

The PHY layer processing section may detect beam failures. The PHY layer processing section may report information about detected beam failures to the MAC layer processing section.

The MAC layer processing section may trigger the transmission of beam recovery requests in the PHY layer processing section. For example, the MAC layer processing section may trigger transmission of a beam recovery request based on information about beam failures reported from the PHY layer processing section.

That is, the beam failure instance indication may include information to indicate whether a beam failure (or beam failure instance) has occurred or not, and/or whether there is a new candidate beam or not.

The MAC layer processing section may increment the count on a given counter (beam failure instance counter) based on the information about beam failures reported from the PHY layer processing section above, and trigger the transmission of the beam recovery request from the PHY layer processing section when the value on the counter reaches or exceeds a given threshold.

Also, when various pieces of information reported from the radio base station 10 are acquired from the received signal processing section 404, the control section 401 may update the parameters used in the control based on these pieces of information.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit or signal generation apparatus that can be described based on general understanding of the technical field to which this disclosure pertains.

For example, the transmission information generation section 402 generates uplink control signals such as delivery acknowledgment information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and output the result to the transmitting/receiving sections 203. The mapping section 403 can be constituted by a mapper, a mapping circuit or mapping apparatus that can be described based on general understanding of the technical field to which this disclosure pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which this disclosure pertains. Also, the received signal processing section 404 can constitute the receiving section according to this disclosure.

The received signal processing section 404 outputs the decoded information acquired through the receiving processes, to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit or measurement apparatus that can be described based on general understanding of the technical field to which this disclosure pertains.

For example, the measurement section 405 may perform RRM measurements, CSI measurements, and so on, based on the received signals. The measurement section 405 may measure the received power (for example, RSRP), the received quality (for example, RSRQ, SINR, SNR, etc.), the signal strength (for example, RSSI), transmission path information (for example, CSI) and so on. The measurement results may be output to the control section 401.

### (Hardware Structure)

Note that the block diagrams that have been used to describe the present embodiment show blocks in functional units. These functional blocks (components) may be implemented in arbitrary combinations of hardware and/or software. Also, the method for implementing each functional block is not particularly limited. That is, each functional block may be realized by 1 piece of apparatus that is physically and/or logically aggregated, or may be realized by directly and/or indirectly connecting two or more physically and/or logically separate pieces of apparatus (via wire or wireless, for example) and using these multiple pieces of apparatus.

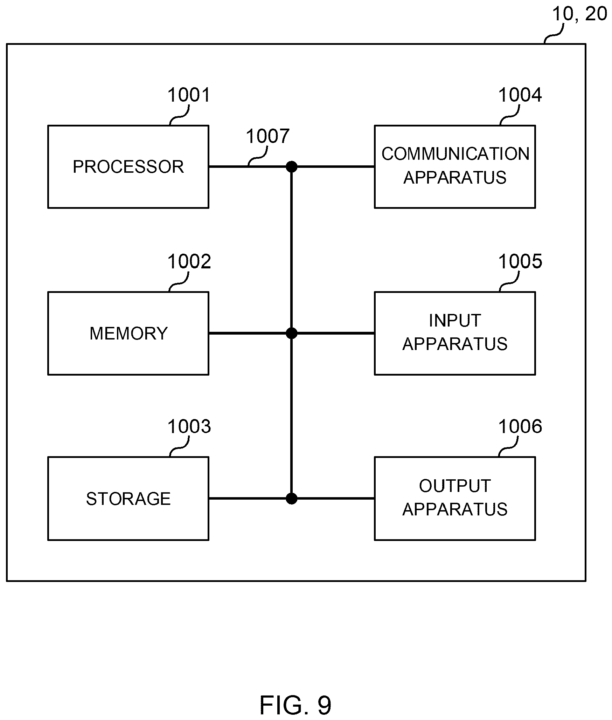

For example, the radio base station, user terminals and so on according to the present embodiment may function as a computer that executes the processes of each example of the present embodiment. FIG. 9 is a diagram to show an exemplary hardware structure of a radio base station and a user terminal according to the present embodiment. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only 1 processor 1001 is shown, a plurality of processors may be provided. Furthermore, processes may be implemented with 1 processor, or processes may be implemented in sequence, or in different manners, on one or more processors. Note that the processor 1001 may be implemented with one or more chips.

The functions of the radio base station 10 and the user terminal 20 are implemented by allowing hardware such as the processor 1001 and the memory 1002 to read given software (programs), thereby allowing the processor 1001 to do calculations, the communication apparatus 1004 to communicate, and the memory 1002 and the storage 1003 to read and/or write data.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and so on for implementing the radio communication methods according to the present embodiment.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving apparatus) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals" (or "signaling"). Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or multiple slots in the time domain. A subframe may be a fixed time duration (for example, 1 ms) not dependent on the numerology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of mini-slots. Each mini-slot may be comprised of one or more symbols in the time domain. Also, a mini-slot may be referred to as a "subslot."

A radio frame, a subframe, a slot, a mini-slot and a symbol all represent the time unit in signal communication. A radio frame, a subframe, a slot, a mini-slot and a symbol may be each called by other applicable names. For example, 1 subframe may be referred to as a "transmission time interval (TTI)," or a plurality of consecutive subframes may be referred to as a "TTI," or 1 slot or mini-slot may be referred to as a "TTI." That is, a subframe and/or a TTI may be a subframe (1 ms) in existing LTE, may be a shorter period than 1 ms (for example, 1 to 13 symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that, when a TTI is given, the period of time (for example, the number of symbols) in which transport blocks, code blocks and/or codewords are actually mapped may be shorter than the TTI.

Note that, when 1 slot or 1 mini-slot is referred to as a "TTI," one or more TTIs (that is, one or multiple slots or one or more mini-slots) may be the minimum time unit of scheduling. Also, the number of slots (the number of mini-slots) to constitute this minimum time unit of scheduling may be controlled.

A TTI having a time duration of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "partial TTI" (or a "fractional TTI"), a "shortened subframe," a "short subframe," a "mini-slot," a "sub-slot" and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be 1 slot, 1 mini-slot, 1 subframe or 1 TTI in length. 1 TTI and 1 subframe each may be comprised of one or more resource blocks. Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, 1 RE may be a radio resource field of 1 subcarrier and 1 symbol.

Note that the structures of radio frames, subframes, slots, mini-slots, symbols and so on described above are merely examples. For example, configurations pertaining to the number of subframes included in a radio frame, the number of slots included per subframe or radio frame, the number of mini-slots included in a slot, the number of symbols and RBs included in a slot or a mini-slot, the number of subcarriers included in an RB, the number of symbols in a TTI, the symbol duration, the length of cyclic prefixes (CPs) and so on can be variously changed.

Also, the information and parameters described in this specification may be represented in absolute values or in relative values with respect to given values, or may be represented using other applicable information. For example, a radio resource may be specified by a given index.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, in a memory), or may be managed in a control table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI)), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of given information (for example, reporting of information to the effect that "X holds") does not necessarily have to be sent explicitly, and can be sent in an implicit way (for example, by not reporting this piece of information, by reporting another piece of information, and so on).

Decisions may be made in values represented by 1 bit (0 or 1), may be made in Boolean values that represent true or false, or may be made by comparing numerical values (for example, comparison against a given value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, 3) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each example/embodiment of this disclosure may be applied to a configuration in which communication between a radio base station and a user terminal is replaced with communication among a plurality of user terminals (D2D (Device-to-Device)). **In** this case, user terminals 20 may have the functions of the radio base stations 10 described above. **In** addition, terms such as "uplink" and "downlink" may be interpreted as "side." For example, an "uplink channel" may be interpreted as a "side channel."

Likewise, the user terminals in this specification may be interpreted as radio base stations. **In** this case, the radio base stations 10 may have the functions of the user terminals 20 described above.

Certain actions which have been described in this specification to be performed by base stations may, in some cases, be performed by their upper nodes. **In** a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The examples/embodiments illustrated in this specification may be used individually or in combinations, which may be switched depending on the mode of implementation. The order of processes, sequences, flowcharts and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

The examples/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark) and other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used herein only for convenience, as a method for distinguishing between two or more elements. In this way, reference to the first and second elements does not imply that only 2 elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. **In** addition, to "judge" and "determine" as used herein may be interpreted to mean making judgements and determinations related to resolving, selecting, choosing, establishing, comparing and so on. **In** other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between 2 elements that are "connected" or "coupled" to each other. The coupling or connection between the elements may be physical, logical or a combination of these. For example, "connection" may be interpreted as "access."

As used herein, when 2 elements are connected, these elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical (both visible and invisible) regions.

**In** the present specification, the phrase "A and B are different" may mean "A and B are different from each other." The terms such as "leave" "coupled" and the like may be interpreted as well.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

### (Additional Explanation)

Now, supplementary ideas about the present disclosure will be provided below for additional explanation.

### <Interaction between PHY (Physical) and MAC (Media Access Control) layer on UE side for beam recovery (beam recovery or beam failure recovery)>

### <Background>

RAN (Radio Access Network) 1 has agreed on the following:
- The number of consecutive beam failure (beam failure) instances
- When the number of beam failure instances detected in a row exceeds the maximum number configured, a beam recovery request (a beam recovery request or a beam failure recovery request) may be transmitted.
- Both beam failure information and new candidate beam information should be provided
- The WA (Working Assumption) on trigger condition 1 for beam recovery request transmission will be confirmed by future revision.
- The following trigger conditions are supported at least for beam failure recovery request transmission:
- Condition 1: at least in the event only CSI-RS is used to identify new candidate beams, a beam failure is detected and candidate beams are identified

RAN 2 has agreed on the following:
- Physical random access channel (PRACH)-based contention is supported
- When there is a beam associated with a dedicated "preamble/resource" and the beam is above a threshold, UE operates in a contention-free manner. Otherwise, the UE operates in a contention-based manner.
- Beam selection in MAC
- Beam selection is explicitly indicated in MAC, as in the case of handover (HO).

### <Outline of procedure of proposed scheme>

- PHY layer
- In all cases beam failures occur, PHY sends beam failure instance indications to MAC.
- When a new candidate beam is found, PHY sends state 1 to MAC to indicate a "beam failure instance with a new candidate beam index."
- A new candidate beam index for transmitting the report to MAC is selected based on the UE's implementation.
- When no new candidate beam is found, PHY sends state 2 to MAC to indicate a "beam failure instance with no new candidate beam found."
- If all cases in which beam failures occur, PHY sends state 0 to MAC to indicate "non-beam failure."
- MAC layer
- When a beam failure instance (for example, state 1 and state 2 (from PHY)) is received, 1 is added on the beam failure instance counter (in MAC).
- If a non-beam failure indication (for example, state 0 (from PHY)) is received, the beam failure instance counter (in MAC) is stopped and reset.
- If the beam failure instance counter shows a value greater than or equal to a pre-configured value, MAC triggers beam recovery request transmission.
- The selection between the contention-based PRACH and the non-contention-based PRACH for transmitting the beam recovery request takes place in MAC.

Note that the counter may be replaced by a timer.

### <Proposal>

Proposal 1: For beam failure detection in the beam failure recovery procedure, the number of consecutive beam failure instances is counted in the MAC layer.
- Proposal 2: In beam failure recovery, different new candidate beams or the same new candidate beam may be indicated to MAC, and PHY selects the beams to report when multiple beams are higher than a threshold, and the selection of new candidate beams for beam recovery request transmission takes place in the MAC layer.
- Proposal 3: 3 types of states to report are defined.
- Non-beam failure
- Beam failure instance + new candidate beam index
- Beam failure instance + no discovery of new candidate beam
- Proposal 4: The selection between the contention-based PRACH and the non-contention-based PRACH for transmitting the beam recovery request takes place in MAC.
- If multiple new candidate beams are reported from PHY, MAC determines which beam is used to transmit the beam recovery request.
- If a beam that is selected is associated with a pre-configured CFRA (Contention-Free Random Access), MAC uses CFRA for beam recovery request transmission.
- If a beam that is selected is not associated with a pre-configured CFRA, MAC uses CFRA for beam recovery request transmission.

### <Advantages>

- In beam recovery, commands of uniform content can be used between the PHY layer and the MAC layer.
- Redundant interaction between the PHY layer and the MAC layer can be avoided.
- When no new candidate beam information is indicated to MAC, MAC asks PHY to provide new candidate beam information when the number of consecutive beam failure instances is greater than a number that is configured in advance.
- Higher flexibility is ensured for MAC, so as to select a type (for example, CBRA (Contention-Based Random Access) or CFRA) that is suitable for beam recovery transmission.
- Higher flexibility is ensured for MAC, so as to select a beam that is suitable for beam recovery transmission. For example, where there are different beam failure instances, 2 different new candidate beam indices can be provided from PHY, and MAC can select the beam that appears more frequently for beam recovery request transmission.
- The counting takes place in MAC, so that the complexity in PHY can be reduced.

### <Clarification>

- A gNB (gNodeB) response window provides a period for monitoring for gNB response.
- When no response is detected in the window, UE retransmits the request.
- The beam recovery timer starts from beam failure detection and stops when a gNB response is received.
- UE behavior after a beam recovery request is transmitted
- Option 1: Indications are constantly and periodically transmitted
- Option 2: Transmission of indications stops after a beam recovery request is transmitted
- Assumption 1: PHY and MAC both have gNB response windows.
- The current agreement is effective.
- Assumption 2: Only PHY has gNB windows.
- After a beam recovery request has been transmitted, PHY indicates to MAC whether or not a gNB response is successfully received.
- PHY
- If a gNB response is received in a window, PHY transmits an indication to show that "a gNB response has been received," to MAC, and stop the beam recovery timer.
- If no gNB response is received in a window, PHY transmits an indication to show that "no gNB response has been received," to MAC.
- MAC
- If an indication to the effect that "a gNB response has been received" arrives, MAC resets the beam failure instance counter.
- If an indication to the effect that "no gNB response has been received" arrives, MAC triggers beam recovery request transmission.

Now, although the present disclosure has been described in detail above, it should be obvious to a person skilled in the art that the present disclosure is by no means limited to the embodiments described herein. The present disclosure can be implemented with various corrections and in various modifications, without departing from the scope of the present invention defined based on the recitations of claims. Consequently, the description herein is provided only for the purpose of explaining examples, and should by no means be construed to limit the invention concerning this disclosure in any way.

## Claims

1. A terminal (20) comprising:
a control section (401) configured to increment a beam failure instance counter, in a higher layer, based on a beam failure instance indication received from a physical layer; and
a transmission section (402) configured to, when the beam failure instance counter is greater than or equal to a given threshold, transmit a beam recovery request using a random access preamble based on a transmission instruction from the higher layer, **characterized in that** if there is no response for the random access preamble within a given response window period, the control section is configured to perform a control to retransmit the random access preamble, and
the control section (401) is configured to notify the transmission instruction from the higher layer to the physical layer, which is used for instructing the transmission of the random access preamble using a Physical Random Access Channel, PRACH, wherein the random access preamble corresponds to a Synchronization Signal Block, SSB, or a Channel State Information Reference Signal, CSI-RS, associated with a candidate beam.

2. The terminal (20) according to claim 1, wherein the transmission section (402) is configured to use contention-free random access, CFRA, to transmit the random access preamble.

3. A radio communication method performed by a terminal (20) comprising:
incrementing a beam failure instance counter, in a higher layer, based on a beam failure instance indication received from a physical layer; and
when the beam failure instance counter is greater than or equal to a given threshold, transmitting a beam recovery request using a random access preamble based on a transmission instruction from the higher layer,
**characterized by**
if there is no response for the random access preamble within a given response window period, performing a control to retransmit the random access preamble, and
notifying the transmission instruction from the higher layer to the physical layer, which is used for instructing the transmission of the random access preamble using a Physical Random Access Channel, PRACH, wherein the random access preamble corresponds to a Synchronization Signal Block, SSB, or a Channel State Information Reference Signal, CSI-RS, associated with a candidate beam.

## Patentansprüche

1. Endgerät (20), umfassend:
einen Steuerabschnitt (401), der so konfiguriert ist, dass er einen Strahlausfallinstanzzähler in einer höheren Schicht basierend auf einer von einer physikalischen Schicht empfangenen Strahlausfallinstanzangabe erhöht; und
einen Übertragungsabschnitt (402), der so konfiguriert ist, dass er, wenn der Strahlausfallinstanzzähler größer als oder gleich groß wie ein gegebener Schwellenwert ist, eine Strahlwiederherstellungsanfrage unter Verwendung einer Zufallszugriffspräambel basierend auf einer Übertragungsanweisung von der höheren Schicht überträgt,
**dadurch gekennzeichnet, dass**
wenn keine Antwort für die Zufallszugriffspräambel innerhalb einer gegebenen Zeitdauer für ein Antwortfenster vorliegt, der Steuerabschnitt so konfiguriert ist, dass er eine Steuerung durchführt, um die Zufallszugriffspräambel erneut zu übertragen, und
der Steuerabschnitt (401) so konfiguriert ist, dass er die Übertragungsanweisung von der höheren Schicht an die physikalische Schicht, die zum Anweisen der Übertragung der Zufallszugriffspräambel unter Verwendung eines physikalischen Direktzugriffskanals, PRACH, verwendet wird, mitteilt, wobei die Zufallszugriffspräambel einem Synchronisationssignalblock, SSB, oder einem Informationsreferenzsignal des Kanalzustands, CSI-RS entspricht, die einem Kandidatenstrahl zugeordnet sind.

2. Endgerät (20) nach Anspruch 1, wobei der Übertragungsabschnitt (402) so konfiguriert ist, dass er konkurrenzfreien Direktzugriff, CFRA, verwendet, um die Zufallszugriffspräambel zu übertragen.

3. Funkkommunikationsverfahren, das von einem Endgerät (20) durchgeführt wird, umfassend:
Erhöhen eines Strahlausfallinstanzzählers in einer höheren Schicht basierend auf einer von einer physikalischen Schicht empfangenen Strahlausfallinstanzangabe; und
wenn der Strahlausfallinstanzzähler größer als oder gleich groß wie ein gegebener Schwellenwert ist, Übertragen einer Strahlwiederherstellungsanfrage unter Verwendung einer Zufallszugriffspräambel basierend auf einer Übertragungsanweisung von der höheren Schicht,
**gekennzeichnet durch**,
wenn keine Antwort für die Zufallszugriffspräambel innerhalb einer gegebenen Zeitdauer für ein Antwortfenster vorliegt, Durchführen einer Steuerung, um die Zufallszugriffspräambel erneut zu übertragen und die Übertragungsanweisung von der höheren Schicht der physikalischen Schicht, die zum Anweisen der Übertragung der Zufallszugriffspräambel unter Verwendung eines physikalischen Direktzugriffskanals, PRACH, verwendet wird, mitzuteilen, wobei die Zufallszugriffspräambel einem Synchronisationssignalblock, SSB, oder einem Informationsreferenzsignal des Kanalzustands, CSI-RS entspricht, die einem Kandidatenstrahl zugeordnet sind.

## Revendications

1. Terminal (20) comprenant :
une section de commande (401) configurée pour incrémenter un compteur d'instance de défaillance de faisceau, dans une couche supérieure, sur la base d'une indication d'instance de défaillance de faisceau reçue d'une couche physique ; et
une section de transmission (402) configurée pour, lorsque le compteur d'instance de défaillance de faisceau est supérieur ou égal à un seuil donné, transmettre une demande de récupération de faisceau en utilisant un préambule d'accès aléatoire sur la base d'une instruction de transmission en provenance de la couche supérieure,
**caractérisé en ce que**
s'il n'y a pas de réponse pour le préambule d'accès aléatoire dans une période de fenêtre de réponse donnée, la section de commande est configurée pour mettre en œuvre une commande de manière à retransmettre le préambule d'accès aléatoire, et
la section de commande (401) est configurée pour notifier l'instruction de transmission en provenance de la couche supérieure à la couche physique, qui est utilisée pour ordonner la transmission du préambule d'accès aléatoire en utilisant un canal d'accès aléatoire physique, PRACH, dans lequel le préambule d'accès aléatoire correspond à un bloc de signaux de synchronisation, SSB, ou à un signal de référence d'informations d'état de canal, CSI-RS, associé à un faisceau candidat.

2. Terminal (20) selon la revendication 1, dans lequel la section de transmission (402) est configurée pour utiliser un accès aléatoire sans contention, CFRA, de manière à transmettre le préambule d'accès aléatoire.

3. Procédé de communication radio mis en œuvre par un terminal (20) comprenant :
une incrémentation d'un compteur d'instance de défaillance de faisceau, dans une couche supérieure, sur la base d'une indication d'instance de défaillance de faisceau reçue d'une couche physique ; et
lorsque le compteur d'instance de défaillance de faisceau est supérieur ou égal à un seuil donné, une transmission d'une demande de récupération de faisceau en utilisant un préambule d'accès aléatoire sur la base d'une instruction de transmission en provenance de la couche supérieure,
**caractérisé par**
s'il n'y a pas de réponse pour le préambule d'accès aléatoire dans une période de fenêtre de réponse donnée, le fait d'effectuer une commande de manière à retransmettre le préambule d'accès aléatoire, et une notification de l'instruction de transmission en provenance de la couche supérieure à la couche physique, qui est utilisée pour ordonner la transmission du préambule d'accès aléatoire en utilisant un canal d'accès aléatoire physique, PRACH, dans lequel le préambule d'accès aléatoire correspond à un bloc de signaux de synchronisation, SSB, ou à un signal de référence d'informations d'état de canal, CSI-RS, associé à un faisceau candidat.
